# EUROPÄISCHE PATENTANMELDUNG

(11) **EP 1 471 016 A1**
(43) Veröffentlichungstag der Anmeldung: **27.10.2004**
(21) Anmeldenummer: 04004390.3
(22) Anmeldetag: 26.02.2004
(51) Int. Cl.: B65G 47/54, B65G 17/00, B65G 15/12

(54) **Vorrichtung zum Ausschleusen von Lastträgern**

(30) Priorität: 31.03.2003 DE 10328555
(71) Anmelder: SIEMENS AKTIENGESELLSCHAFT, 80333 München (DE)
(72) Erfinder: Hug, Jürgen, 63110 Rodgau (DE)

(57) **Zusammenfassung**

Die Erfindung betrifft eine Vorrichtung zum Ausschleusen und Umsetzen von Lastträgern auf quer zu einer Förderstrecke (1) verlaufende Anschlußförderer (2) mittels parallel zueinander und quer zur Förderstrecke umlaufender Transportriemen (2a, b und c), die eine horizontale Auflage für die Lastträger (3) bilden. Um eine solche Vorrichtung zu schaffen, die bei geringem Herstellungsaufwand und einfacher Funktionsweise schnell und wirkungsvoll arbeitet, wird vorgeschlagen dass mindestens zwei der Transportriemen (2a und 2b) wenigstens in die der Ausschleusvorrichtung (4) zugewandte Hälfte der Förderstrecke (1) hineinragen und mindestens ein weiterer Transportriemen (2c) die Förderstrecke (1) durchgreift, und dass die Transportriemen unterhalb der Transportebenen der Förderstrecke (1) verlaufen und tragseitig bereichsweise mit Auflageleisten (14) bestückt sind, die beim Umlauf der Transportriemen (2a, b und c) nach oben aus der Transportebenen der Förderstrecke (1) herausbewegbar sind , wobei die Auflageleisten einen über den Transportriemen positionierten Lastträger (3) an mindestens drei Auflagepunkten untergreifen.

## Beschreibung

Die Erfindung betrifft eine Vorrichtung zum Ausschleusen von auf einer Förderstrecke, insbesondere Rollenbahn transportierten Lastträgern, wie Stückgutbehältern, Paletten oder dgl. und Umsetzen der Lastträger auf quer zu der Förderstrecke verlaufende Anschlussförderer oder Speicherplätze mittels mehrerer parallel zueinander und quer zur Förderstrecke in senkrechten Ebenen um Umlenkräder umlaufender Transportriemen, die eine horizontale Auflage für die Lastträger bilden.

Derartige Förderstrecken dienen dem Transport von Stückgütern, sie werden beispielsweise zum Transport von Gepäckstücken im Gepäckverteilanlagen eingesetzt, wobei die Gepäckstücke in Behältern abgelegt und zu ihren Bestimmungsorten transportiert werden. Der Begriff Behälter beschränkt sich dabei nicht auf geschlossene Behältnisse, sondern umfasst auch zum Beispiel Paletten mit gitterartigen, nach oben offenen Seitenbegrenzungen.

Eine derartige Förderstrecke kann auch eine Speicherfunktion übernehmen, indem Behälter aus der Förderstrecke ausgeschleust werden, auf einen Anschlussförderer absetzt und wenn nötig wieder rechtwinkelig in den Förderfluss einschleust werden. Durch das rechtwinkelige Ausschleusen der Behälter aus dem Förderfluss wird zum Speichern weniger Platz benötigt, als wenn, wie bisher üblich, in Längsrichtung gespeichert würde.

Um Lastträger seitlich aus Förderstrecken ausschleusen zu können, sind verschiedene Lösungen bekannt geworden. So beschreibt die DE 40 33 699 die Übergabestation einer Förderstrecke mit angetriebenen Übergabeförderern für Transporteinheiten, wie Paletten, Stückgut und dgl., die von dem Übergabeförderer von der Förderstrecke auf einen seitlich daran anschließenden Abförderer übergeben werden. Der Übergabeförderer, der entweder im Verlauf oder am Ende der Förderstrecke angeordnet ist, wird zur Übergabe einschließlich der darauf ruhenden Transporteinheit aus der Förderrichtung der Förderstrecke heraus um eine vertikale Achse in Richtung des Abförderers geschwenkt. Anschließend erfolgt durch die angetriebenen Tragrollen des Übergabeförderers der Transport auf den angrenzenden Abförderer. Eine solche Vorrichtung ist nachteilig, weil der Schwenkvorgang sehr zeitaufwendig ist, auch weil stets ein Zurückschwenken des Übergabeförderers erforderlich ist. Hinsichtlich der verwendeten Drehantriebe ist die bekannte Vorrichtung auch kompliziert und teuer.

Aus der DE 28 39 339 C2 ist eine Anordnung zum gegenseitigen Anheben zweier sich kreuzender Fahrbahnen bekannt geworden, bei der das Anheben über Excenter erfolgt. Da die Lösung eine Höheneinstellvorrichtung erfordert, ist sie kompliziert und teuer. Schließlich ist in der DE 42 08 230 ein Gurtförderer beschrieben, der auch als Eckumsetzer mit zwei in einer Richtung verlaufenden äußeren Gurtsträngen und zwei oder drei zwischen diesen und quer dazu verlaufenden inneren Gurtsträngen ausgeführt werden kann. Auch dieser bekannte Eckumsetzer benötigt einen Vertikalantrieb zum Umsetzen des Transportgutes mit Hilfe der angehobenen Fördergurte und ist deshalb aufwendig, teuer und relativ langsam.

Aufgabe der vorliegenden Erfindung ist es, eine Vorrichtung zum Ausschleusen oder Umsetzen von auf einer Förderstrecke transportierten Lastträgern vorzuschlagen, die bei geringem Herstellungsaufwand und einfacher Funktionsweise schnell und wirkungsvoll arbeitet.

Zur Lösung dieser Aufgabe wird erfindungsgemäß vorgeschlagen, das mindestens zwei der Transportriemen wenigstens in die der Ausschleusvorrichtung zugewandte Hälfte der Förderstrecke hineinragen und mindestens ein weiterer Transportriemen die Förderstrecke durchgreift, und dass die Transportriemen unterhalb der Transportebene der Förderstrecke verlaufen und tragseitig bereichsweise mit Auflageleisten bestückt sind, die beim Umlauf der Transportriemen nach oben aus der Transportebene der Förderstrecke herausbewegbar sind, wobei die Auflageleisten einen über den Transportriemen positionierten Lastträger an mindestens drei Auflagepunkten untergreifen.

Die vorgeschlagene Vorrichtung zum Ausschleusen von Lastträgern hebt über mindestens drei parallel laufende Transportriemen, die jeweils ein Teilstück einer Auflageleiste tragen, die Behälter ohne einen zusätzlichen Hubantrieb, nur über den Fahrantrieb aus. Außerhalb des Ausschleusbetriebes laufen die Transportriemen unterhalb der Transportebene der Förderstrecke um. Sobald ein auszuschleusender Lastträger in der Ausschleusvorrichtung, d.h. oberhalb der Transportriemen positioniert ist, werden die Transportriemen in Umlauf versetzt, wobei die Auflageleisten aus ihren Ruhestellungen unterhalb der Transportebene heraus nach oben bewegt werden, so dass die Auflageleisten entsprechend ihrer Positionierung auf dem Transportgurt den Lastträger untergreifen und von der Förderstrecke abheben. Beim weiteren Umlauf der Transportriemen wird der Lastträger auf den Auflageleisten aufliegend quer zur Förderstrecke bewegt und an der Stelle abgesetzt, wo die Auflageleisten beim Umlauf um die Umlenkräder nach unten unter die Förderebene abtauchen.

Vorzugsweise ist vorgesehen, dass insgesamt drei Transportriemen vorgesehen sind, wobei der die Förderstrecke durchgreifende Transportriemen zwischen den beiden äußeren, in die Förderstrecke hineinragenden Transportriemen angeordnet ist. Im Normalfall werden zwei äußere parallele Transportriemen vorgesehen sein, die in den Seitenbereich der der Ausschleusvorrichtung zugewandten Seite der Förderstrecke hineinragen und die eine Auflagekante des Lastträgers untergreifen. Mindestens ein weiterer, denkbar sind auch zwei weitere Transportriemen, ist zwischen diesen beiden äußeren Transportriemen angeordnet und durchgreift die Förderstrecke im Bereich entsprechender Ausnehmungen. Sie ragen bis in den Randbereich der Förderstrecke, der der Ausschleusvorrichtung abgewandt ist. Auf diese Weise können beispielsweise die beiden äußeren Tragriemen mit ihren Auflageleisten beim Umlauf um die Umlenkräder den Lastträger an den beiden vorderen Auflagekantenbereichen anheben, während gleichzeitig der oder die dazwischen angeordneten Tragriemen die gegenüberliegende Auflagekante des Lastträgers anhebt, bzw. anheben. Dadurch wird sichergestellt, dass der Lastträger von der Förderstrecke etwa parallel zur horizontalen Förderebene abgehoben und seitlich verfahren wird.

Selbstverständlich können nach einer anderen Ausgestaltung der Erfindung die die Förderstrecke durchgreifenden Transportriemen auch außen angeordnet sein, während der oder die in die Förderstrecke hineinragenden Transportriemen dazwischen angeordnet sind.

Vorzugsweise ist erfindungsgemäß jeweils ein Umlenkrad eines jeden Transportriemens antreibbar. Das zweite Umlenkrad wird von dem Transportriemen in Umlauf gesetzt.

Besonders günstig ist es, wenn die außerhalb der Förderstrecke angeordneten Umlenkräder mindestens der in die Förderstrecke hineinragenden Transportriemen auf einer gemeinsamen Achse angeordnet und als synchron antreibbare Antriebsräder ausgebildet sind. Auf diese Weise werden nicht nur der Antrieb und die Konstruktion vereinfacht, auch ein synchroner Umlauf der Transportriemen wird dadurch sichergestellt, insbesondere wenn nach einem weiteren Merkmal der Erfindung die Antriebsräder der in die Förderstrecke hineinragenden Transportriemen auf einer gemeinsamen Welle befestigt sind, die über einen angebauten Antriebs-Getriebemotor antreibbar ist. Mit nur einem einzigen Antrieb lassen sich so beide Transportriemen synchron antreiben.

Konstruktiv vorteilhaft ist es, wenn in einer günstigen Ausgestaltung der Erfindung auch die nicht angetriebenen Umlenkräder der in die Förderstrecke hineinragenden Transportriemen auf einer gemeinsamen Welle angeordnet sind.

Wenn erfindungsgemäß ein Umlenkrad des die Förderstrecke durchgreifenden Transportriemens auf der gemeinsamen Welle mit den nicht angetriebenen Umlenkräder der in die Förderstrecke hineinragenden Transportriemen angeordnet ist, so entfällt ein weiterer Antrieb für diesen Transportriemen, denn das Umlenkrad wird über die gemeinsame Welle über die anderen angetriebenen Transportriemen geschleppt.

Um einen Gleichlauf aller Transportriemen zu sichern weisen die Transportriemen gleiche Umfangslängen auf und sind als Zahnriemen ausgeführt, die mit ihrer gezahnten Seite in die mit entsprechender Gegenverzahnung versehenen antreibenden Umlenkräder eingreifen. Zahnriemen eignen sich besonders gut für die Verwendung in der vorliegenden Erfindung, weil sie schlupffrei auch große Lasten ausschleusen können und weil die Synchronität der parallel umlaufenden Transportriemen durch die Verzahnung garantiert ist.

Die Auflageleisten der erfindungsgemäßen Vorrichtung sind nach einem weiteren Merkmal der Erfindung auf die Transportriemen aufgeschweißt, vulkanisiert oder geschraubt. Die Auflageleisten können aus einem Stück gefertigt sein, müssen jedoch elastisch um die Umlenkräder umlenkbar sein, es ist auch denkbar, die Leisten aus einzelnen Segmenten oder Segmentteilen zusammenzusetzen.

Die vorliegende Erfindung und deren Wirkungsweise wird am einfachsten anhand der Zeichnungen erklärt, die ein Ausführungsbeispiel darstellen. Es zeigt:
- Figur 1: eine Draufsicht auf die erfindungsgemäße Ausschleusvorrichtung
- Figur 2: eine Seitenansicht der erfindungsgemäßen Vorrichtung mit Behältern und
- Figur 3: den verwendeten Transportriemen in einem Gleitprofil im Schnitt.

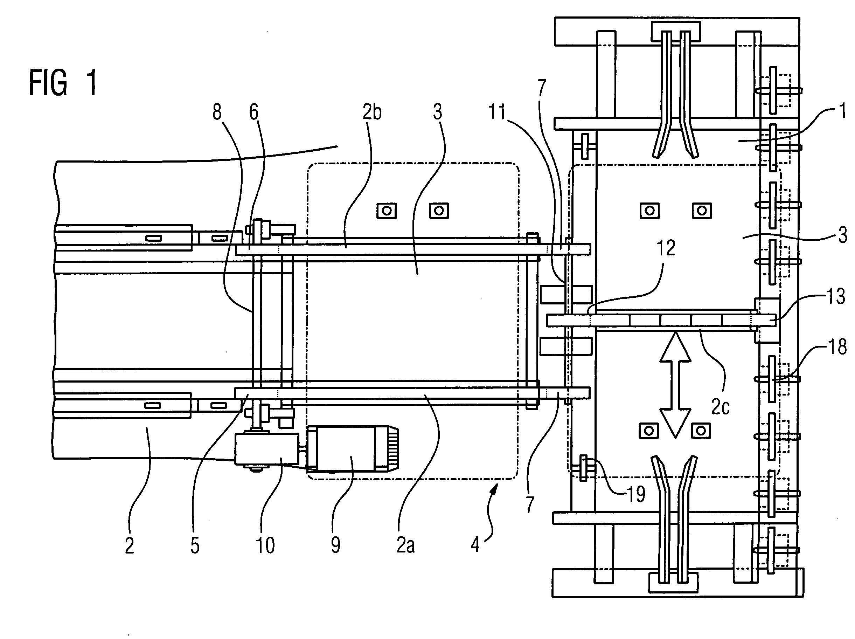

Das Ausführungsbeispiel der Erfindung zeigt grob schematisch einen Gepäckförderer, wie er an Flughäfen zum Transportieren, Verteilen und Speichern von Gepäckstücken verwendet wird. In Figur 1 ist in einer Draufsicht eine erfindungsgemäße Einrichtung dargestellt, die aus der mit 1 bezeichneten Förderstrecke in Form eines Rollenförderers besteht, der mit dem Quer- oder Anschlussförderer 2 verbunden ist. Um Behälter 3, die auf dem Rollenförderer 1 heran- oder abgeführt werden, auf den Querförderer 2 umsetzen zu können, ist die erfindungsgemäße Ausschleusvorrichtung vorgesehen, die insgesamt mit 4 bezeichnet ist. Sie besteht aus drei umlaufenden, als Zahnriemen ausgebildeten Transportriemen, die mit 2a. 2b und 2c bezeichnet sind. Wie in der Zeichnungsfigur 1 erkennbar, sind die Transportriemen 2a und 2b auf der dem Rollenförderer 1 abgewandten Seite um Umlenkräder 5 und 6 in vertikalen Ebenen umlaufend geführt. Erkennbar ragen die beiden äußeren Transportriemen 2a und 2b lediglich bis in den Randbereich des Rollenförderers 1 hinein, wo sie um die am Rahmengerüst des Rollenförderers gelagerten Umlenkräder 7 geführt sind. Die auf der gegenüberliegenden Seite angeordneten Umlenkräder 2a und 2b sind auf einer gemeinsamen Welle angeordnet und angetrieben.

Für die beiden auf einer gemeinsamen Welle angeordneten Umlenkräder 2a und 2b ist ein gemeinsamer Antriebsmotor 9 vorgesehen, der sein Antriebsmoment über ein Getriebe 10 unmittelbar in die gemeinsame Welle leitet und für einen synchronen Umlauf der beiden Transportriemen Sorge trägt. Die Umlenkräder 7 der Transportriemen 2a und 2b sind ebenfalls auf einer gemeinsamen Welle 11 angeordnet, der jedoch kein separater Antrieb zugeordnet ist. Die frei drehgelagerte Welle 11 wird über die angetriebenen Transportriemen 2a und 2b angetrieben, auf der die Umlenkräder 7 befestigt sind. In der Mitte zwischen den beiden Umlenkrädern 7 ist auf der Welle 11 das Umlenkrad 12 des Transportriemens 2c befestigt, so dass dieses Umlenkrad über die Antriebskette 9, 10, 8, 5/6 2a/2b, 7 und 11 drehangetrieben wird und den über die Umlenkkräder 12 und 13 umlaufenden Transportriemen 2c in Umlauf versetzt. Der Transportriemen 2c durchgreift dabei den Rollenförderer 1 und untergreift den strichpunktiert dargestellten Behälter 3, um diesen mit der erfindungsgemäßen Vorrichtung 4 von dem Rollenförderer 1 auf den Querförderer 2 umsetzen zu können.

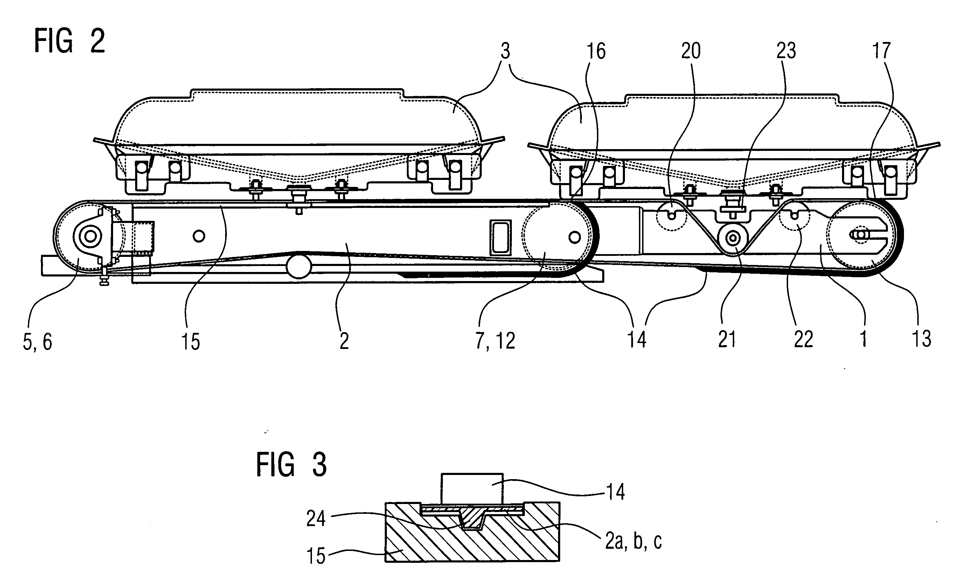

Figur 2 lässt in der Seitenansicht erkennen, dass alle drei Transportriemen 2a, b und c mit auf der Oberseite der Transportriemen aufgesetzten Auflageleisten 14 versehen sind, die sich jedoch nur bereichsweise über den Längsumfang der endlos umlaufenden Transportriemen 2a, b und c erstrecken. Erkennbar ist in Figur 2 ebenfalls, dass die Transportriemen 2a und b in ihrem oberen Trum von Gleitschienen 15 unterstützt werden, um die Tragfähigkeit der Transportriemen zu gewährleisten. An der in Figur 2 dargestellten Position eines auf dem Rollenförderer 1 positionierten Behälters 3 (rechte Zeichnungsseite) ist erkennbar, dass jeweils der Anfang der auf den äußeren Transportriemen 2a und b angebrachten Auflageleisten 14 den Behälter 3 bei 16 zu untergreifen beginnt. Der Anfang der auf dem mittleren Transportriemen 2c angebrachten Auflageleisten 14 beginnt den Behälter 3 bei 17 zu untergreifen. Beim Umlauf der gleichlangen Transportriemen 2 a, 2b und 2 c um die Umlenkräder 5 und 7 bzw. 6 und 7 sowie 12 und 13, alle direkt oder indirekt angetrieben von dem Antrieb 9/10, wandern die Auflageleisten 14 mit dem Obertrum der Transportriemen 2a, 2b und 2c (in der Zeichnungsfigur) nach links. Dabei heben sich die Auflageleisten 14 aus der Transportebene der Förderstrecke heraus und transportieren den von den Rollen 18 und 19 (Figur 1) des Rollenförderers 11 abgehobenen Behälter 3 nach links. Dabei liegt der Behälter 3 zunächst beim weiteren Transport bei 16 und 17 auf den Auflageleisten 14 auf, und zwar die vordere Kante des Behälters 3 auf den Auflageleisten 14 der beiden äußeren Transportriemen 2a und 2b und der hintere Bereich des Behälters 3 auf der Auflageleiste 14 des mittleren Transportriemens 2c. Dieser Zustand bleibt bestehen, bis die Auflageleisten 14 der Transportriemen 2a und 2b um die Umlenkräder 5 und 6, bzw. die Auflageleiste 14 des Transportriemens 2c um das Umlenkrad 12 nach unten unter die Förderebene "abtauchen" und den Behälter wieder in seiner ursprünglichen Förderebene auf den als Rollenförderer ausgebildeten Querförderers 2 ablegen

In Figur 2 ist in der rechten Zeichnungshälfte zu erkennen, dass der Transportriemen 2c um weitere Umlenkräder 20, 21 und 22 nach unten aus seiner Richtung ausgelenkt ist. Dies ist vorgesehen, um die hier nicht weiter zu erläuternden, nach unten ragenden Antriebsmittel 23 an den Behältern 3 in der Transportrichtung (senkrecht zur Zeichnungsebene) auf dem Rollenförderer 11 nicht zu behindern, diese Umlenkung hat für die Erfindung ansonsten keine Bewandtnis und ändert deren Funktionsweise nicht, so lange die Länge aller umlaufenden Transportriemen gleich ist.

Um sowohl einen synchronen Umlauf der Transportriemen sicherzustellen als auch einen Schlupf der Transportriemen zu vermeiden, der die Position der Auflageleisten relativ zueinander verschieben würde. Sind die Transportriemen 2a, b und c als Zahnriemen ausgebildet, wie dies in der Schnittdarstellung nach Fig. 3 erkennbar ist. Mindestens die antreibenden Umlenkräder 5 und 6, sowie 12 sind entsprechend den Verzahnungen der Tansportriemen ebenfalls verzahnt, wobei ein zentraler Steg 24 zwischen den Verzahnungen der Transportriemen die Geradeausführung der Transportriemen sicherstellt.

Die im Ausführungsbeispiel als Ausschleusvorrichtung dargestellte Vorrichtung kann selbstverständlich durch kinematische Umkehr zum Einschleusen verwendet werden, sie kann als Eckumsetzer auch am Ende einer Förderstrecke eine Verbindung zu einem Querförderer herstellen, sie kann auch als Weiche betrieben werden.

Der besondere Vorteil der vorliegenden Erfindung besteht in deren Einfachheit und Funktionalität, denn weder Kupplungen noch aufwendige Hubvorrichtungen, wie sie beim Stand der Technik erforderlich war, werden benötigt, um die Behälter von einer Förderstrecke seitlich aus- und oder einzuschleusen.

## Patentansprüche

1. Vorrichtung zum Ausschleusen von auf einer Förderstrecke (1), insbesondere Rollenbahn transportierten Lastträgern, wie Stückgutbehältern (3), Paletten oder dergleichen, und Umsetzen der Lastträger auf quer zu der Förderstrecke (1) verlaufende Anschlußförderer (2) oder Speicherplätze mittels mehrerer parallel zueinander und quer zur Förderstrecke in senkrechten Ebenen um Umlenkräder (5, 6, 7, 12 und 13) umlaufender Transportriemen (2a, b und c), die eine horizontale Auflage für die Lastträger (3) bilden,
**dadurch gekennzeichnet, dass** mindestens zwei der Transportriemen (2a und 2b) wenigstens in die der Ausschleusvorrichtung (4) zugewandte Hälfte der Förderstrecke (1) hineinragen und mindestens ein weiterer Transportriemen (2c) die Förderstrecke (1) durchgreift, und dass die Transportriemen (2a, b und c) unterhalb der Transportebenen der Förderstrecke (1) verlaufen und tragseitig bereichsweise mit Auflageleisten (14) bestückt sind, die beim Umlauf der Transportriemen (2a, b und c) nach oben aus der Transportebenen der Förderstrecke (1) herausbewegbar sind , wobei die Auflageleisten (14) einen über den Transportriemen (2a, b und c) positionierten Lastträger (3) an mindestens drei Auflagepunkten (16 und 17) untergreifen.

2. Vorrichtung nach Anspruch 1,
**dadurch gekennzeichnet, dass** insgesamt drei Transportriemen (2a, b und c) vorgesehen sind, wobei der die Förderstrecke (1) durchgreifende Transportriemen (2c) zwischen den beiden äußeren, in die Förderstrecke (1) hineinragenden Transportriemen (2a und b) angeordnet ist.

3. Vorrichtung nach Anspruch 1,
**dadurch gekennzeichnet, dass** insgesamt drei Transportriemen (2a, b und c) vorgesehen sind, wobei die die Förderstrecke (1) durchgreifenden Transportriemen (2a und 2b) beidseitig des in die Förderstrecke (1) hineinragenden Transportriemens (2c) angeordnet sind.

4. Vorrichtung nach Anspruch 1 bis 3,
**dadurch gekennzeichnet, dass** jeweils ein Umlenkrad (5, 6 und 12) eines jeden Transportriemens (2a, b und c) antreibbar ist.

5. Vorrichtung nach Anspruch 1 bis 4,
**dadurch gekennzeichnet, dass** die außerhalb der Förderstrecke (1) angeordneten Umlenkräder (5, 6) mindestens der in die Förderstrecke (1) hineinragenden Transportriemen (2a und 2b) auf einer gemeinsamen Achse angeordnet und als synchron antreibbare Antriebsräder ausgebildet sind.

6. Vorrichtung nach Anspruch 1 bis 4,
**dadurch gekennzeichnet, dass** die Antriebsräder (5, 6) der in die Förderstrecke hineinragenden Transportriemen (2a und 2b) auf einer gemeinsamen Welle (8) befestigt sind, die über einen angebauten Antriebs-Getriebemotor (9/10) antreibbar ist.

7. Vorrichtung nach Anspruch 1 bis 6,
**dadurch gekennzeichnet, dass** die nicht angetriebenen Umlenkräder (7) der in die Förderstrecke (1) hineinragenden Transportriemen (2a und 2b) auf einer gemeinsamen Welle (11) angeordnet sind.

8. Vorrichtung nach Anspruch 7,
**dadurch gekennzeichnet, dass** ein Umlenkrad (12) des die Förderstrecke (1) durchgreifenden Transportriemens (2c) auf der gemeinsamen Welle (11) mit den nicht angetriebenen Umlenkräder (7) der in die Förderstrecke (1) hineinragenden Transportriemen (2c) angeordnet ist.

9. Vorrichtung nach Anspruch 1 bis 8, **dadurch gekennzeichnet, dass** die Transportriemen (2a, b und c) gleiche Umfangslängen aufweisen und als Zahnriemen ausgeführt sind, die mit ihrer gezahnten Seite in die mit entsprechender Gegenverzahnung versehenen antreibenden Umlenkräder (5, 6, 12) eingreifen.

10. Vorrichtung nach den Ansprüchen 1 bis 9,
**dadurch gekennzeichnet, dass** die Auflageleisten (14) auf die Transportriemen (2a, b und c) aufgeschweißt, vulkanisiert oder geschraubt sind.
